# EUROPÄISCHE PATENTSCHRIFT

(11) **EP 1 129 396 B1**
(45) Veröffentlichungstag und Bekanntmachung des Hinweises auf die Patenterteilung: **12.11.2003**
(21) Anmeldenummer: 00967557.0
(22) Anmeldetag: 09.09.2000
(51) Int. Cl.: G06F 1/26

(54) **VORRICHTUNG UND VERFAHREN ZUR STROMVERSORGUNG VON RECHNER-ZUSATZGERÄTEN ÜBER DAS BUSSYSTEM DES RECHNERS**
DEVICE AND METHOD FOR SUPPLYING POWER TO COMPUTER PERIPHERAL EQUIPMENT USING THE BUS SYSTEM OF THE COMPUTER
DISPOSITIF ET PROCEDE D'ALIMENTATION ELECTRIQUE DE PERIPHERIQUE D'ORDINATEUR VIA UN SYSTEME DE BUS DE L'ORDINATEUR

(30) Priorität: 14.09.1999 DE 19944053
(43) Veröffentlichungstag der Anmeldung: 05.09.2001
(73) Patentinhaber: Infineon Technologies AG, 81669 München (DE)
(72) Erfinder: LANGER, Thomas, 81667 München (DE); FÖDLMEIER, Dieter, 84032 Altdorf (DE); SEIDENBERG, Stefan, 81673 München (DE)
(74) Vertreter: Beck, Alexander, Dipl.-Ing.
(86) Internationale Anmeldenummer: DE0003156
(87) Internationale Veröffentlichungsnummer: WO01020433

(56) Entgegenhaltungen:
- US-A- 5 638 540
- US-A- 5 799 196
- US-A- 5 884 086

## Beschreibung

Die vorliegende Erfindung betrifft eine Vorrichtung und ein Verfahren zur Stromversorgung von Rechner-Zusatzgeräten über das Bussystem des Rechners sowie ein Verfahren zum intelligenten Starten des Rechners wenn ein für für ihn bestimmter Ruf über ein ISDN-System ankommt.

Bei modernen Rechnern, insbesondere bei PC's und noch mehr bei Laptops werden die Anforderungen an einen möglichst geringen Stromverbrauch der Rechner immer schärfer. Dadurch steht für Zusatzgeräte des Rechners (sowohl in interner Form als Steckkarten als auch als externe Zusatzgeräte) zunehmend weniger Energie aus dem Bus des Rechners zur Verfügung, da zum Zwecke der Energieeinsparung die entsprechenden Netzgeräte der Rechner zunehmend kleiner ausgelegt werden.

Dementsprechend beinhalten nun die aktuellen Spezifikationen und Empfehlungen im Bereich USB und PC (USB-Spec.1.2, PC99) sehr strenge Anforderungen an die maximale elektrische Leitungsaufnahme von Zusatzgeräten. Ein PC darf zum Beispiel mit Einführung des ACPI (Advance Configuration and Power Interface) beispielsweise im Schlaf- oder Ruhemodus (Suspend-Mode) weniger als fünf Watt verbrauchen. Dies hat zur Folge, daß ein USB-Zusatzgerät von einer separaten Energiequelle (beispielsweise einem Steckernetzteil) gespeist werden muß, wenn sein Stromverbrauch zu hoch wird. Der PC steht dann nicht mehr als Stromlieferant zur Verfügung. Steckernetzteile sind teuer, belegen Platz in der 230 Volt-Steckerleiste und der Nutzer hat ein Kabel mehr an dem Zusatzgerät oder am Rechner.

Aus der US 5,638,540 ist bereits eine Vorrichtung zur Stromversorgung von Rechner-Zusatzgeräten über das Bussystem des Rechners bekannt, bei der ein Energiespeicher in dem Zusatzgerät vorgesehen ist, der die Stromversorgung des Zusatzgeräts unterstützt, und der über eine geeignete Ladeschaltung mit der Stromversorgung in dem Bussystem des Rechners verbunden ist. Bei dieser bekannten Vorrichtung zur Stromversorgung wird jedoch die Stromversorgung des Rechners ständig durch den Ladestrom belastet.

Aufgabe der vorliegenden Erfindung ist es daher, eine Belastung der Stromversorgung des Rechners durch Ladestrom völlig unterbinden zu können, wenn die Stromversorgung des Rechners keine ausreichende Leistung liefern kann.

Erfindungsgemäß wird diese Aufgabe dadurch gelöst, daß eine Schaltvorrichtung zwischen der Stromversorgung in dem Bussystem des Rechners und der Ladeschaltung angeordnet ist.

Vorzugsweise ist der Energiespeicher dabei ein Akkumulator.

Vorzugsweise kann die Ladeschaltung gleichzeitig eine Strombegrenzungsvorrichtung zur Begrenzung der maximal der Stromversorgung des Bussystems des Rechners entnommenen Stromstärke umfassen.

Es ist dabei besonders bevorzugt, eine weitere Schaltvorrichtung zwischen dem Energiespeicher und der Stromversorgung des Zusatzgeräts und eine zusätzliche Schaltvorrichtung zur direkten Verbindung der Stromversorgung in dem Bussystem des Rechners mit der Stromversorgung des Zusatzgeräts vorzusehen. Durch diese zusätzliche Schaltvorrichtungen ergibt sich eine optimale Flexibilität bei der Speisung des Zusatzgeräts. Das Zusatzgerät kann sowohl direkt aus der Stromversorgung des Rechners als auch ausschließlich aus dem Energiespeicher versorgt werden.

Es ist dabei bevorzugt, daß die Steuerung der Schaltvorrichtungen durch ein Power-Management-System im Zusatzgerät erfolgt.

Es ist dabei weiter bevorzugt, die Stromversorgung des Zusatzgeräts mit einem Pufferkondensator zu versehen. Auf diese Weise werden Spannungsschwankungen während des Umschaltens der Schaltvorrichtungen vermieden.

Ebenso wird die erfindungsgemäße Aufgabe durch ein Verfahren zur Stromversorgung von Rechner-Zusatzgeräten über das Bussystem des Rechners gelöst, bei dem in dem Zusatzgerät Energie gespeichert wird, die zur Pufferung hohen Energiebedarfs des Zusatzgeräts dient, und die bei geringerem Energiebedarf des Zusatzgeräts oder bei höherem Energieangebot im Bussystem wieder ergänzt wird, indem die Stromversorgung des Zusatzgeräts bei geringem Energiebedarf des Zusatzgeräts oder bei höherem Energieangebot im Bussystem direkt mit der Stromversorgung im Bussystem verbunden wird, während der Energiespeicher gleichzeitig mit der Stromversorgung im Bussystem verbunden wird, und bei großem Energiebedarf des Zusatzgeräts oder bei geringem Energieangebot im Bussystem der Energiespeicher von der Stromversorgung im Bussystem getrennt wird und die Stromversorgung des Zusatzgeräts ausschließlich mit dem Energiespeicher verbunden wird.

Die Befehle für diese Verbindung können durch eine spezielle Microcontroller-Software im Zusatzgerät erzeugt werden. Auf diese Weise erübrigt sich eine Anpassung im Betriebssystem des Rechners.

Die vorliegende Erfindung wird im folgenden anhand des in den beigefügten Zeichnungen dargestellten Ausführungsbeispiels näher erläutert. Es zeigen:
Fig. 1 ein Blockschaltbild einer erfindungsgemäßen Stromversorgung für ein ISDN-Interface als Zusatzgerät; und
Fig. 2 eine detaillierte Darstellung der Stromversorgung des Zusatzgeräts der Fig. 1.

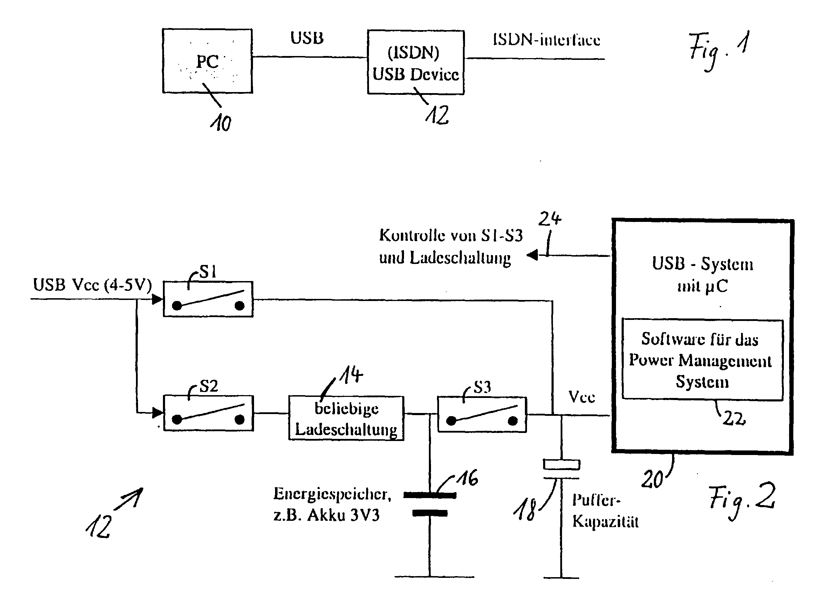

Fig. 1 zeigt eine Ausführungsform der vorliegenden Erfindung, bei der ein PC 10 mit einem USB-Interface dargestellt ist. Ein ISDN-Adapter 12 ist an den USB-Bus und an das S-Interface des ISDN-Netzes angeschlossen. Es ergeben sich dabei folgende Vorgaben durch die Spezifikation des USB-Busses:

Im Normalbetrieb sind 100 mA von jedem angeschlossenen (Low Power) USB-Gerät wie beispielsweise 12 nutzbar.

Im Schlaf- oder Ruhemodus (Suspend Mode) sind maximal 0,5mA nutzbar. Erst ein Aufwecken (= aktivieren) des PC's erlaubt wieder die Abnahme von 100mA Strom.

Die vorliegende Erfindung löst das Problem, daß diese Vorgaben von jedem beliebigen an den USB angeschlossenen Zusatzgerät eingehalten werden müssen. Wegen der extrem geringen im Suspend-Mode zulässigen Stromaufnahme, müßte nun normalerweise jedes Zusatzgerät ein eigenes Steckernetzgerät besitzen. Die ist zum einen sehr aufwendig und würde sich speziell dann nicht lohnen, wenn der Stromverbrauch des Zusatzgerätes nur gering über dem maximal zulässigen Wert liegt.

Speziell im vorliegenden Fall eines ISDN-Interfaces ergeben sich durch die Spezifikation von ISDN folgende weitere Vorgaben für dieses ISDN-Interface: Im Gegensatz zu einem Analog-Modem muß schon beim Anruf (bevor es "klingelt") festgestellt werden, ob der Anruf für das Endgerät sinnvoll ist (ob also eine Datenübertragung oder ein Fax über den Dienstkanal angekündigt ist), oder ob ein anderes Gerät gemeint ist (zum Beispiel das Telefon). Hierzu ist eine Abarbeitung des D-Kanal-Protokolls des ISDN, also des Dienstkanal-Protokolls erforderlich. Wenn festgestellt wird, daß der Anruf dem PC gilt, ist ein Aufwecken des PC (Intelligent Wake up) erforderlich. Dazu müßte kurzfristig vom PC mehr als die im Suspend Mode erlaubten 0,5mA Strom gezogen werden, damit das D-Kanal-Protokoll auf dem USB-Endgerät 12 den Anruf auswerten und gegebenenfalls den PC 10 aufwecken und den Anruf so lange "festhalten" kann, bis der PC aktiv ist. Der PC benötigt nämlich spezifikationsgemäß fünf bis zehn Sekunden für den Übergang vom Suspend-Mode in den Normalbetrieb. Der Strombedarf ist dabei aber wesentlich größer als die erlaubten 0,5mA (sh. Vorgabe Stromverbrauch in der USB-Spezifikation).

Die Reaktion des D-Kanal-Protokolls auf den Anruf muß nach wenigen Sekunden erfolgt sein. Der Anruf würde nie akzeptiert, wenn der PC 10 erst hochfahren müßte (Vorgabe Reaktionszeit aus ISDN-Spezifikation). Außerdem wird an manchen ISDN-Nebenstellenanlagen (PBX-Anlagen) periodisch einmal pro Minute die Uhrzeit auf dem D-Kanal übertragen. Dies erfordert ebenfalls eine Abarbeitung des D-Kanal-Protokolls. Strom darf laut USB-Spezifikation aber nur gezogen werden, wenn der PC aufgeweckt (= aktiviert) würde (um dann ggf. nach fünf Sekunden den PC wieder abzuschalten, da der Ruf nicht für ihn bestimmt war). Dies kann zu einer periodischen "PC-Ein-Aus-Ein..."-Sequenz führen, was natürlich nicht erwünscht ist.

Hier kollidieren also die Vorgaben des ISDN-Protokolls mit den Vorgaben für einen Low-Power-PC:

PC im Suspend-Modus darf maximal fünf Watt verbrauchen (Spezifikation PC99, ACPI-Power-Management)

Ein Hochlaufen des PC's dauert mindestens fünf bis zehn Sekunden

Die ISDN-Protkoll-Stacks (D- und B-Kanal-Stacks komplett) laufen auf dem PC (low-cost Ansatz für den ISDN-Adapter 12), daher wird der PC 10 zur Funktion des USB-Endgeräts 12 benötigt.

Die vorliegende Erfindung löst dieses Problem wie in Fig. 2 dargestellt. Fig. 2 zeigt einen detaillierteren Ausschnitt aus der Schaltung des Zusatzgeräts (USB-Device) 12. Insbesondere ist hier die Verbindung zwischen der Stromversorgung auf dem USB-Bus (USBVCC) mit der Stromversorgung des USB-Zusatzgeräts (VCC) dargestellt.

Dabei ist die Versorgungsspannung auf dem USB-Bus über eine Schaltvorrichtung S1 direkt mit der Stromversorgung VCC des Zusatzgeräts 12 verbindbar. Darüber hinaus ist die Stromversorgung auf dem USB-Bus (USBVCC) über eine weitere Schaltvorrichtung S2 und eine beliebige Ladeschaltung 14 mit einem Energiespeicher, beispielsweise einem Akkumulator 16 verbunden. Der Akku 16 ist wiederum über eine weitere Schaltvorrichtung S3 mit der Stromversorgung VCC des Zusatzgeräts 12 verbunden. Zusätzlich kann die Stromversorgung des Zusatzgeräts 12 über eine Pufferkapazität, beispielsweise einen Elektrolytkondensator 18 gepuffert sein, damit Spannungsschwankungen beim nicht genau gleichzeitigen Umschalten der Schalter S1 und S3 ausgeglichen werden können.

Die übrigen Schaltungen in dem Zusatzgerät 12 sind hier lediglich als Black Box 20 dargestellt, die die übrigen Schaltungen des USB-Endgeräts mit dem entsprechenden Micro-Controller enthält. Als zusätzliches Feld 22 ist die Software für das erfindungsgemäße Power-Management-System 22 dargestellt, die auf dem Micro-Controller des USB-Zusatzgeräts 12 läuft.

Von dieser Software wird über den Micro-Controller auch die Ladeschaltung 14 und die Schaltvorrichtungen S1 bis S3 gesteuert. Dies ist durch den Pfeil 24 angedeutet.

Das erfindungsgemäße USB-Endgerät-Power-Management-System besteht daher aus:
1. Spezieller Power-Management-Software im USB-Micro-Controller auf dem USB-Zusatzgerät, die die Schaltzustände der Schaltvorrichtungen S1 bis S3 steuert und
2. Einer elektronischen/mechanischen Schaltung wie in Fig. 2 dargestellt, die in dem USB-Zusatzgerät 12 untergebracht werden muß.

Die spezielle Software führt dabei folgende Funktionen aus:

Wenn der PC 10 aktiv ist (Normalbetrieb) und das USB-Zusatzgerät 12 entsprechend mit dem PC verbunden ist, werden die Schalter S1 und S2 geschlossen, der Schalter S3 ist offen.

In diesem Zustand wird also der Akku geladen oder die Akkuladung erhalten, die Stromversorgung des Zusatzgeräts 12 erfolgt direkt aus dem USB-Bus über den Schalter S1. Dies ist kein Problem, da in diesem Betriebszustand des PC's eine Stromaufnahme bis 100mA zulässig ist.

Sobald sich der PC in den Ruhezustand (Suspend) begibt, wird der Schalter S2 geöffnet, damit der USB-Bus nicht unnötig mit Lade- bzw. Haltestrom des Akkumulators belastet wird. Solange das USB-Zusatzgerät 12 ebenfalls im Ruhezustand ist und keine zusätzliche Energie benötigt, bleibt der Schalter S1 geschlossen und der Schalter S3 geöffnet. Der Ruhestrom der übrigen Schaltungen 20 des Zusatzgeräts 12 kann nämlich problemlos auf 0,5mA beschränkt werden, so daß weiterhin die Versorgung über den USB-Bus zulässig ist. Die Batterie ist sowohl vom Bus als auch von der Stromversorgung des Zusatzgeräts 12 abgeklemmt, damit die Batterieladung möglichst lange hält.

Sobald das Zusatzgerät 12 feststellt, daß es mehr Strom benötigt, beispielsweise weil auf dem ISDN-D-Kanal ein ankommender Anruf signalisiert wird, wird der Schalter S3 geschlossen und der Schalter S1 geöffnet. Nunmehr können die Schaltungen 20 in dem Zusatzgerät 12 über die Stromversorgung VCC beliebig Strom aus dem Energiespeicher 16 ziehen, ohne an die 0,5mA-Strombegrenzung des PC-Busses im Ruhezustand gebunden zu sein. Mit dieser Energieversorgung kann das Zusatzgerät 12 das D-Kanal-Protokoll abarbeiten und feststellen, ob der Anruf tatsächlich für den PC 10 bestimmt ist. In diesem Falle hält das Zusatzgerät 12 den Anruf und "weckt", also aktiviert den PC 10.

Bei der völligen Abschaltung des PC's 10 werden zumindest die Schalter S2 und S3 geöffnet, damit der Energiespeicher 16 nicht unnötig an Ladung verliert, der Schalter S1 kann geöffnet oder geschlossen sein.

Die entsprechenden Betriebszustände des Power-Management-Systems sind in der anschließenden Tabelle übersichtlich dargestellt:

| **Schalter geschlossen (Rest offen)** | **Zustände PC** | **Zustände des USB-Devices** | **Erläuterung** |
|---|---|---|---|
| 1,2 | PC aktiv | USB-Device eingesteckt | Akku laden/erhalten, Strom von PC für Endgerät |
| 1 | Suspend/aktiv | Suspend | 500µA von PC. Batterie abgeklemmt von µC und USB |
| 3 | Standby | intelligent Wakeup | Anruf kommt, Batterie versorgt µC, USB wird nicht mit mehr als 500µA belastet |
| (1) | ausgeschaltet | passiv | Batterie von µC und USB abgeklemmt |

Erfindungsgemäß kann also ein Zusatzgerät 12 für den USB-Bus klein, kostengünstig, kundenfreundlich und in Übereinstimmung mit allen Spezifikationen hergestellt werden, ohne daß es als "Self-Powered-Device" mit klobigen Steckernetzteilen ausgerüstet werden muß.

Erfindungsgemäß besitzt das Zusatzgerät 12 statt des Steckernetzteils einen eingebauten Energiespeicher, beispielsweise einen Akku. Diese Lösung ist besonders sinnvoll, wenn nur geringe Leistungen erforderlich sind, beispielsweise bei Telekommunikationsanwendungen wie ISDN, oder wenn nur kurze Zeit Leistung benötigt wird.

Erfindungsgemäß wird also durch einen Energiespeicher 16 "An Bord" des Zusatzgeräts 12 durch trickreiche Anschaltung des Energiespeichers an das System ein "Pseudo-Bus-Powered-Device" geschaffen, das wesentlich einfacher für den Nutzer zu handhaben ist und produktionstechnisch preiswerter ist.

Das erfindungsgemäße USB-Endgerät-Power-Management-System kann vorteilhafterweise allgemein bei allen USB-Endgeräten am PC eingesetzt werden, die bezüglich des maximal zulässigen Stromverbrauchs Schwierigkeiten haben, die vorgegebenen Spezifikationen zu erfüllen. Die Bedeutung der USB-Endgeräte wird weiter wachsen, da in Zukunft die bisherigen ISA und PCI-Karten im PC durch die neuen USB-Karten ersetzt werden sollen.

Mittels der vorliegenden Erfindung ist es möglich, einen ISDN-Controller nach USB-Standard mit einem einzigen Chip zu bauen, wobei das Gerät die Größe einer Streichholzschachtel aufweist. Nur mit der vorliegenden Erfindung ist es möglich, ein "intelligentes Wecken" des PC's, (d.h. der PC wird hochgefahren, falls ein Anruf kommt) durchzuführen, ohne ein externes Stecker-Netzteil zu benötigen, da sonst nicht genügend Strom zur Verfügung steht, um die entsprechenden ISDN-Protokolle zu bearbeiten.

## Patentansprüche

1. Vorrichtung zur Stromversorgung von Rechner-Zusatzgeräten (12) über das Bussystem (USB) des Rechners (10), bei der ein Energiespeicher (16) in dem Zusatzgerät (12) vorgesehen ist, der die Stromversorgung des Zusatzgeräts (12) unterstützt, und der über eine geeignete Ladeschaltung (14) mit der Stromversorgung in dem Bussystem (USB) des Rechners (10) verbunden ist, **dadurch gekennzeichnet, daß** eine Schaltvorrichtung (S2) zwischen der Stromversorgung in dem Bussystem (USB) des Rechners (10) und der Ladeschaltung (14) angeordnet ist.

2. Vorrichtung nach Anspruch 1, **dadurch gekennzeichnet, daß** der Energiespeicher (16) ein Akkumulator ist.

3. Vorrichtung nach Anspruch 1 oder 2, **dadurch gekennzeichnet, daß** die Ladeschaltung (14) gleichzeitig eine Strombegrenzungsvorrichtung zur Begrenzung der maximal der Stromversorgung des Bussystems (USB) des Rechners (10) entnommenen Stromstärke umfaßt.

4. Vorrichtung nach einem der Ansprüche 1 bis 3, **dadurch gekennzeichnet, daß** eine weitere Schaltvorrichtung (S3) zwischen dem Energiespeicher (16) und der Stromversorgung des Zusatzgeräts (12) und eine zusätzliche Schaltvorrichtung (S1) zur direkten Verbindung der Stromversorgung in dem Bussystem (USB) des Rechners (10) mit der Stromversorgung des Zusatzgeräts (12) vorgesehen sind.

5. Vorrichtung nach Anspruch 4, **dadurch gekennzeichnet, daß** die Steuerung der Schaltvorrichtungen (S1, S2, S3) durch ein Power-Management-System im Zusatzgerät (12) erfolgt.

6. Vorrichtung nach einem der Ansprüche 1 bis 5, **dadurch gekennzeichnet, daß** die Stromversorgung des Zusatzgeräts (12) mit einem Pufferkondensator (18) versehen ist.

7. Verfahren zur Stromversorgung von Rechner-Zusatzgeräten (12) über das Bussystem (USB) des Rechners (10), bei dem in dem Zusatzgerät (12) Energie gespeichert wird, die zur Pufferung hohen Energiebedarfs des Zusatzgeräts (12) dient, und die bei geringerem Energiebedarf des Zusatzgeräts (12) oder bei höherem Energieangebot im Bussystem (USB) wieder ergänzt wird, **dadurch gekennzeichnet, daß** die Stromversorgung des Zusatzgeräts (12) bei geringem Energiebedarf des Zusatzgeräts (12) oder bei höherem Energieangebot im Bussystem (USB) direkt mit der Stromversorgung im Bussystem (USB) verbunden wird, während der Energiespeicher (16) gleichzeitig mit der Stromversorgung im Bussystem (USB) verbunden wird, und bei großem Energiebedarf des Zusatzgeräts (12) oder bei geringem Energieangebot im Bussystem (USB) der Energiespeicher (16) von der Stromversorgung im Bussystem (USB) getrennt wird und die Stromversorgung des Zusatzgeräts (12) ausschließlich mit dem Energiespeicher (16) verbunden wird.

8. Verfahren nach Anspruch 7, **dadurch gekennzeichnet, daß** die Befehle für die Verbindungen durch eine spezielle Microcontroller-Software im Zusatzgerät (12) erzeugt werden.

## Claims

1. Device for supplying power to computer peripheral equipment (12) via the bus-system (USB) of the computer (10), wherein an energy store (16) is provided in the peripheral implement (12) supporting the power supply of the peripheral implement (12) and which by a suitable charge circuit (14) is connected with the power supply in the bus system (USB) of the computer (10), **characterized in that** there is provided a switching device (S2) between the power supply in the bus-system (USB) of the computer (10) and the charge circuit (14).

2. Device according to claim 1, **characterized in that** the energy store (16) is a storage battery.

3. Device according to claim 1 or 2, **characterized in that** the charge circuit (14) simultaneously is having a current limiting device for limiting the current intensity maximally drawn from the bus-system (USB) of the computer (10).

4. Device according to any of the claims 1 to 3, **characterized in that** there is provided a further switching device (S3) between the energy store (16) and the power supply of the peripheral implement (12) with an additional switching device (S1) being provided for directly connecting the power supply in the bus-system (USB) of the computer (10) with the power supply of the peripheral implement (12).

5. Device according to claim 4, **characterized in that** the control of the switching devices (S1, S2, S3) is performed by a power-management-system in the peripheral implement (12).

6. Device according to any of the claims 1 to 5, **characterized in that** the power supply of the peripheral implement (12) is provided with a buffer capacitor (18).

7. A method for supplying power to computer peripheral implements (12) via the bus-system (USB) of the computer (10) in which energy is stored in the peripheral implement (12) serving the buffering of high energy demands of the peripheral implement (12) and which is supplemented again at a lower energy demand of the peripheral implement (12) or a higher energy offer of the bus-system (USB), **characterized in that** the power supply of the peripheral implement (12) is directly connected with the power supply in the bus-system (USB) at a low energy demand of the peripheral implement (12) or a higher energy offer in the bus-system (USB) while the energy store (16) simultaneously is connected in the bus-system (USB) and, wherein the energy store (16) is disconnected from the power supply in the bus-system (USB) and the power supply of the peripheral implement (12) exclusively is connected with the energy store (16) at a high energy demand of the peripheral implement (12) or at a low energy offer in the bus-system (USB).

8. A method according to claim 7, **characterized in that** the commands for the connections are created by a special micro controller software in the peripheral implement (12).

## Revendications

1. Dispositif pour l'alimentation électrique de périphériques (12) d'ordinateurs par l'intermédiaire du système de bus (USB) de l'ordinateur (10) dans lequel le périphérique (12) comporte un réservoir d'énergie (16) qui supporte l'alimentation électrique du périphérique (12) et qui est relié à l'alimentation électrique du système de bus (USB) par l'intermédiaire d'un circuit de charge (14) approprié, **caractérisé en ce qu'**un dispositif de commutation (S2) est prévu entre l'alimentation électrique du système de bus (USB) de l'ordinateur (10) et le circuit de charge (14).

2. Dispositif selon la revendication 1, **caractérisé en ce que** le réservoir d'énergie (16) est un accumulateurs

3. Dispositif selon la revendication 1 ou 2, **caractérisé en ce que** le circuit de charge (14) comprend en même temps un dispositif limiteur de courant pour limiter l'intensité maximale prélevée de l'alimentation électrique du système de bus (USB) de l'ordinateur (10).

4. Dispositif selon l'une des revendications 1 à 3, **caractérisé en ce qu'**un dispositif de commutation (S3) supplémentaire est placé entre le réservoir d'énergie (16) et l'alimentation électrique du périphérique (12) et qu'un dispositif de commutation (S1) supplémentaire est prévu pour relier l'alimentation électrique du système de bus (USB) de l'ordinateur (10) directement à l'alimentation électrique du périphérique (12).

5. Dispositif selon la revendication 4, **caractérisé en ce que** la commande des dispositifs de commutation (S1, S2, S3) s'effectue par l'intermédiaire d'un système de gestion de l'alimentation intégré au périphérique (12).

6. Dispositif selon l'une des revendications 1 à 5, **caractérisé en ce que** l'alimentation électrique du périphérique (12) est dotée d'un condensateur tampon (18).

7. Procédé pour l'alimentation électrique de périphériques (12) d'ordinateurs par l'intermédiaire du système de bus (USB) de l'ordinateur (10), qui consiste à accumuler de l'énergie dans le périphérique (12) qui sert de tampon pour satisfaire les grands besoins en énergie du périphérique, et qui est rechargée en cas de basse consommation du périphérique ou en cas d'apports accrus en énergie par le système de bus (USB), **caractérisé en ce que** l'alimentation électrique du périphérique (12) est directement reliée à l'alimentation électrique du système de bus (USB) en cas de basse consommation du périphérique et d'apports accrus en énergie du système de bus (USB), tandis que le réservoir d'énergie (16) est coupé de l'alimentation électrique du système de bus (USB) et que l'alimentation électrique du périphérique (12) est exclusivement reliée au réservoir d'énergie (16).

8. Procédé selon la revendication 7 **caractérisé en ce que** les commandes pour les liaisons sont générées par un logiciel spécifique de microcontrôleur intégré au périphérique (12).
